# EUROPEAN PATENT APPLICATION

(11) **EP 2 608 531 A2**
(43) Date of publication of application: **26.06.2013**
(21) Application number: 12196157.7
(22) Date of filing: 07.12.2012
(51) Int. Cl.: H04N 5/33

(54) **Thermal imaging camera for infrared rephotography**

(30) Priority: 20.12.2011 US 201113331633
(71) Applicant: Fluke Corporation Inc., Everett, WA 98203 (US)
(72) Inventor: Neeley, John E., Seattle Washington 98103 (US); McManus, Thomas J., Plymouth Minnesota 55441 (US); Bergstrom, Peter A., St. Paul Minnesota 55105 (US); Johnson, Kirk R., Rogers Minnesota 55374 (US)
(74) Representative: Howe, Steven

(57) **Abstract**

Thermal imaging cameras for use in retaking infrared images and methods of retaking thermal images with thermal imaging cameras and possibly employing computational rephotography on a visible light image taken concurrently with an original thermal image to help guide the camera back to the position where the original thermal image was captured.

## Description

### RELATED APPLICATION

The present application is related to the following commonly assigned utility patent application, which is filed concurrently herewith: THERMAL IMAGING CAMERA FOR INFRARED REPHOTOGRAPHY, Practitioner Docket No. 56581.6.103. Any portion of the methods or portions of the cameras described in this related application for retaking an infrared photograph may be combined with any of the methods or cameras described herein for retaking an infrared photograph. For instance, the method steps or the programming of the processor for returning the camera to the position of the first photograph described in the this related application may be combined with the method steps or the programming of the processor for returning the camera to the position of the first photograph described in the instant application.

### TECHNICAL FIELD

This disclosure relates to thermal imaging cameras and, more particularly, to thermal imaging cameras for use in retaking infrared images.

### BACKGROUND

Thermal imaging cameras are used in a variety of situations. For example, thermal imaging cameras are often used during maintenance inspections to thermally inspect equipment. Example equipment may include rotating machinery, electrical panels, or rows of circuit breakers, among other types of equipment. Thermal inspections can detect equipment hot spots such as overheating machinery or electrical components, helping to ensure timely repair or replacement of the overheating equipment before a more significant problem develops.

Depending on the configuration of the camera, the thermal imaging camera may also generate a visible light image of the same object. The camera may display the infrared image and the visible light image in a coordinated manner, for example, to help an operator interpret the thermal image generated by the thermal imaging camera. Unlike visible light images which generally provide good contrast between different objects, it is often difficult to recognize and distinguish different features in a thermal image as compared to the real-world scene. For this reason, an operator may rely on a visible light image to help interpret and focus the thermal image.

In applications where a thermal imaging camera is configured to generate both a thermal image and a visual light image, the camera may include two separate sets of optics: visible light optics that focus visible light on a visible light sensor for generating the visible light image, and infrared optics that focus infrared radiation on an infrared sensor for generating the infrared optics.

It is sometimes useful to compare infrared images from the past to current infrared images of the same object, objects, or scene. In this way, changes can be detected which might not otherwise be apparent by observing only the current image. However, if the positioning of the camera and the conditions under which the images were taken in the past are not the same as those under which the current image is taken, the infrared image of the object may appear to have changed when no change has actually occurred, or it may appear to have changed more or less than it actually has. Therefore, in order for the comparison to be as accurate as possible, the images which are being compared should be taken from the same location and under the same conditions. However, finding the precise camera location and determining that the exact same conditions are applied can be very difficult and time consuming. It would therefore be useful to improve the ease with which infrared images or fused infrared and visible light images can be repeated for purposes of detecting changes over time.

### SUMMARY

Certain embodiments of the present invention include a portable, hand-held thermal imaging camera that has a visible light (VL) lens assembly with an associated VL sensor for detecting VL images of a target scene and an infrared (IR) lens assembly with an associated IR sensor for detecting thermal images of a target scene. The camera also includes a display, a memory, and a processor. The processor is programmed with instructions to capture a first VL image concurrently with the capture of a first IR image of the target scene at a first position and at a first point in time, and to capture a second IR image at a second position and at a second point in time. The processor is also programmed with instructions for comparing the first and second VL images to determine the camera motion needed to move the camera toward the first position. The processor is also programmed with instructions to signal the user with instructions how to reposition the camera toward the first position, and to capture the second IR image when the camera is repositioned approximately in the first position. The second IR image may be captured concurrently with the capture of the second VL image or after the capture of the second VL image.

Certain embodiments of the present invention include a method of retaking an infrared (IR) image of a scene. The method includes selecting a first visible light (VL) image of the scene that was captured simultaneously with a first IR image of the scene by a first thermal imaging camera in a first position at a first point in time. The method includes obtaining a live VL image of the scene at a second point in time using a second thermal imaging camera and also comparing the first VL image to the live VL image to determine the camera motion needed to move the second thermal imaging camera toward the first position in order to rephotograph the first IR image. The method also include receiving instructions how to reposition the second thermal imaging camera toward the first position and capture a second IR image when the second thermal imaging camera is repositioned to approximately the first position. The first thermal imaging camera may be the same camera or a different camera than the second thermal imaging camera.

The details of one or more examples are set forth in the accompanying drawings and the description below. Other features and advantages will be apparent from the description and drawings, and from the claims.

### BRIEF DESCRIPTION OF DRAWINGS

FIG. 1 is a perspective front view of an example thermal imaging camera.

FIG. 2 is a perspective back view of the example thermal imaging camera of FIG. 1.

FIG. 3 is a functional block diagram illustrating example components of the thermal imaging camera of FIGS. 1 and 2.

FIG. 4 is a conceptual illustration of an example picture-in-picture type concurrent display of a visual image and an infrared image.

FIG. 5 is a flowchart of a process for positioning a thermal imaging camera for retaking an image.

### DETAILED DESCRIPTION

The following detailed description is exemplary in nature and is not intended to limit the scope, applicability, or configuration of the invention in any way. Rather, the following description provides some practical illustrations for implementing examples of the present invention. Examples of constructions, materials, dimensions, and manufacturing processes are provided for selected elements, and all other elements employ that which is known to those of ordinary skill in the field of the invention. Those skilled in the art will recognize that many of the noted examples have a variety of suitable alternatives.

A thermal imaging camera may be used to detect heat patterns across a scene under observation. The thermal imaging camera may detect infrared radiation given off by the scene and convert the infrared radiation into an infrared image indicative of the heat patterns. In some examples, the thermal imaging camera may also capture visible light from the scene and convert the visible light into a visible light image. Depending on the configuration of the thermal imaging camera, the camera may include infrared optics to focus the infrared radiation on an infrared sensor and visible light optics to focus the visible light on a visible light sensor. Visible light images and infrared images of the scene may be taken simultaneously so that the location of the infrared image can be more easily identified.

In order to detect changes in the infrared radiation over time, embodiments of the invention enable a user to retake an infrared image or fused infrared and visible light image in the same position as an earlier infrared image or fused infrared and visible light image. In this way, the earlier infrared image or fused infrared and visible light image may be compared to the present infrared image or fused infrared and visible light image, so that changes in the infrared aspect of the image, representing changes in heat patterns, may be more easily identified. Furthermore, in order to make the comparison as accurate as possible, embodiments of the invention direct a user to move the camera to the same camera position as the earlier image. The camera may determine the difference between the present position and the earlier position by analyzing the visible light image at the earlier position and comparing it to the visible light image at the present location, and may then direct the user to reposition the camera toward the earlier position until a satisfactory position is achieved.

The detection of changes in the infrared image are particularly useful in certain situations. For example, when an object typically produces heat, it may be difficult to determine whether or not the infrared image indicates a problem. However, a comparison between an earlier and a later image may reveal that the object is producing increased amounts of heat, and therefore that a problem may be present. For example, one could periodically capture infrared images from approximately the same vantage point of many different machines, including an industrial kiln or industrial furnace. Such kilns contain refractory material and such furnaces contain insulation. By monitoring the thermogram of such devices over time and considering the rate of change of the measured temperatures, a user can determine if or when the refractory material or the insulation is deteriorating and may need replacement. However, if the comparison reveals that heat production is stable, then the object may be operating normally.

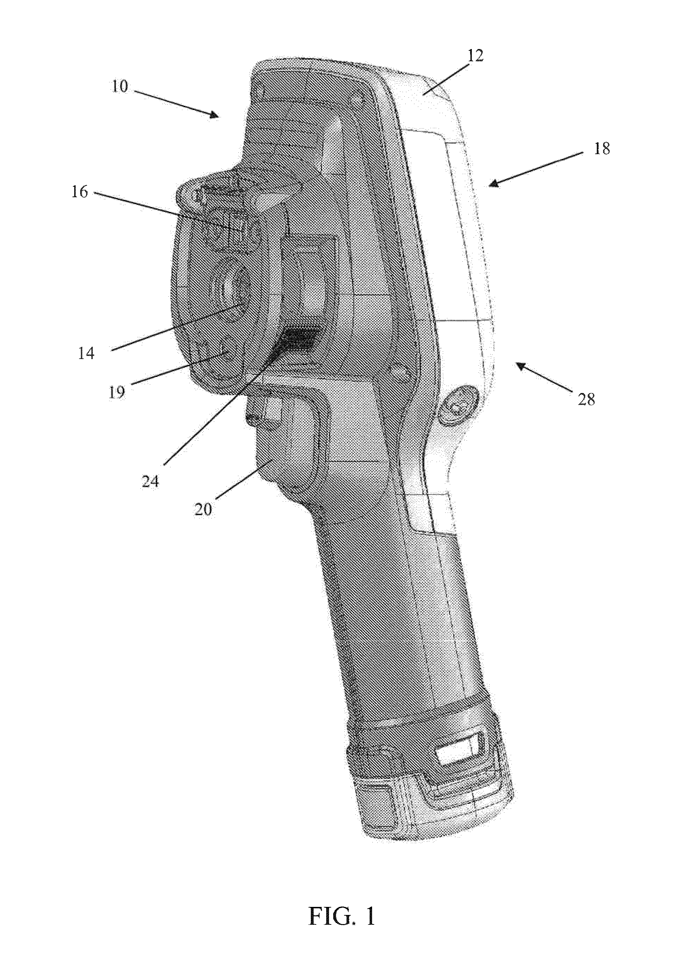

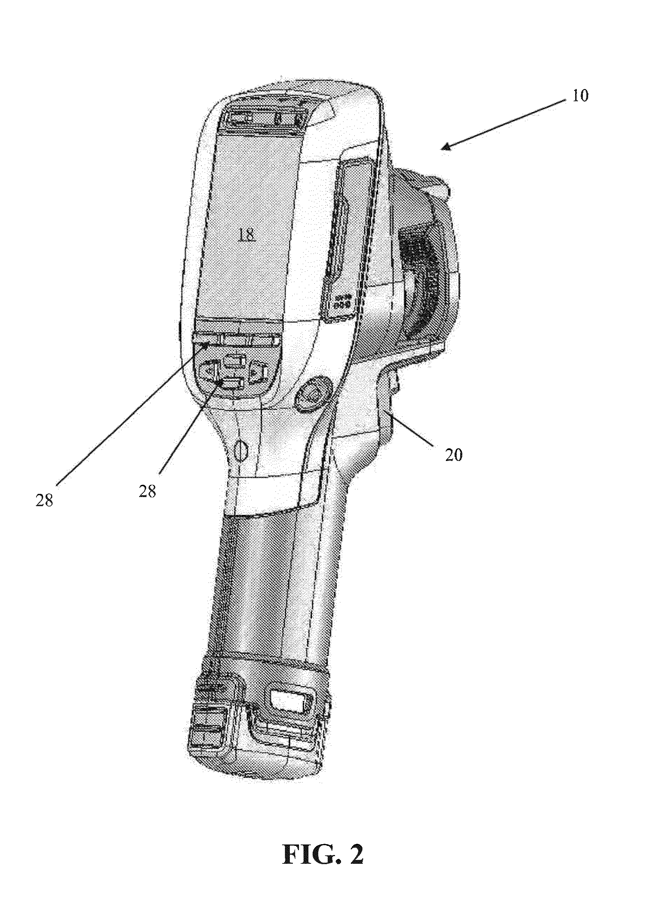

FIGS. 1 and 2 show front and back perspective views, respectively, of a thermal imaging camera 10 that may be used in various embodiments. The camera 10 includes a housing 12, an infrared lens assembly 14, a visible light lens assembly 16, a display 18, a laser 19, and a trigger control 20. Housing 12 houses the various components of thermal imaging camera 10. Infrared lens assembly 14 receives infrared radiation from a scene and focuses the radiation on an infrared sensor for generating an infrared image of a scene. Visible light lens assembly 16 receives visible light from a scene and focuses the visible light on a visible light sensor for generating a visible light image of the same scene. Thermal imaging camera 10 captures the visible light image and/or the infrared image in response to depressing trigger control 20. In addition, thermal imaging camera 10 controls display 18 to display the live infrared image and the visible light images generated by the camera, e.g., to help an operator thermally inspect a scene. Display 18 may further display visual indications directing a user to reposition the camera 10, when the camera 10 is being used to retake a thermal image from the same position as an infrared image or fused infrared and visible light image that was obtained previously. Thermal imaging camera 10 may also include a focus mechanism coupled to infrared lens assembly 14 that is configured to move at least one lens of the infrared lens assembly so as to adjust the focus of an infrared image generated by the thermal imaging camera. In some embodiments, the camera may include a speaker to communicate auditory signals with a user, or a vibration unit to produce a vibratory signal to the user, to signal the user for repositioning the thermal imaging camera 10.

In operation, thermal imaging camera 10 detects heat patterns in a scene by receiving energy emitted in the infrared-wavelength spectrum from the scene and processing the infrared energy to generate an infrared image. Thermal imaging camera 10 may also generate a visible light image of the same scene by receiving energy in the visible light-wavelength spectrum and processing the visible light energy to generate a visible light image. As described in greater detail below, thermal imaging camera 10 may include an infrared camera module that is configured to capture an infrared image of the scene and a visible light camera module that is configured to capture a visible light image of the same scene. The infrared camera module may receive infrared radiation projected through infrared lens assembly 14 and generate therefrom infrared image data. The visible light camera module may receive light projected through visible light lens assembly 16 and generate therefrom visible light data.

In some examples, thermal imaging camera 10 collects or captures the infrared energy and visible light energy substantially simultaneously (e.g., at the same time) so that the visible light image and the infrared image generated by the camera are of the same scene at substantially the same time. In these examples, the infrared image generated by thermal imaging camera 10 is indicative of localized temperatures within the scene at a particular period of time while the visible light image generated by the camera is indicative of the same scene at the same period of time. In other examples, thermal imaging camera may capture infrared energy and visible light energy from a scene at different periods of time.

The scene which is captured by the thermal imaging camera 10 depends upon its position and settings. The position includes not only the location of the thermal imaging camera 10 within the 3 dimensions of space, but also the rotation of the thermal imaging camera 10 within the 3 axis of rotation, for a total of 6 variables therefore determining the camera's position. The camera settings include zoom, lens type or use of a supplemental lens, focal distance, F-number, emissivity, reflected temperature settings, transmission settings of a window, for example, also affect the image. Both the position and the setting are preferably reproduced when an infrared image is retaken for purposes of determining the presence of change in the infrared image over time.

Visible light lens assembly 16 includes at least one lens that focuses visible light energy on a visible light sensor for generating a visible light image. Visible light lens assembly 16 defines a visible light optical axis 26 which passes through the center of curvature of the at least one lens of the assembly. Visible light energy projects through a front of the lens and focuses on an opposite side of the lens. Visible light lens assembly 16 can include a single lens or a plurality of lenses (e.g., two, three, or more lenses) arranged in series. In addition, visible light lens assembly 16 can have a fixed focus or can include a focus adjustment mechanism for changing the focus of the visible light optics. In examples in which visible light lens assembly 16 includes a focus adjustment mechanism, the focus adjustment mechanism may be a manual adjustment mechanism or an automatic adjustment mechanism.

Infrared lens assembly 14 also includes at least one lens that focuses infrared energy on an infrared sensor for generating a thermal image. Infrared lens assembly 14 defines an infrared optical axis 22 which passes through the center of curvature of the at least one lens of the assembly. During operation, infrared energy is directed through the front of the lens and focused on an opposite side of the lens. Infrared lens assembly 14 can include a single lens or a plurality of lenses (e.g., two, three, or more lenses), which may arranged in series.

As briefly described above, thermal imaging camera 10 includes a focus mechanism for adjusting the focus of an infrared image captured by the camera. In the example shown in FIGS. 1 and 2, thermal imaging camera 10 includes focus ring 24. Alternatively, thermal imaging camera 10 may include an automatically adjusting focus mechanism in addition to or in lieu of a manually adjusting focus mechanism. In one application of such an example, thermal imaging camera 10 may use laser 19 to electronically measure a distance between an object in a target scene and the camera. Thermal imaging camera 10 may then control the automatically adjusting focus mechanism to move the at least one lens of infrared lens assembly 14 to a focus position that corresponds to the distance-to-target data determined by thermal imaging camera 10.

During operation of thermal imaging camera 10, an operator may wish to view a live thermal image of a scene and/or a visible light image of the same scene generated by the camera or new image that has been captured and stored. For this reason, thermal imaging camera 10 may include a display. In the examples of FIGS. 1 and 2, thermal imaging camera 10 includes display 18, which is located on the back of housing 12 opposite infrared lens assembly 14 and visible light lens assembly 16. Display 18 may be configured to display live or stored visible light images, infrared images, and/or fused images that are a simultaneous display of the visible light image and the infrared image. In different examples, display 18 may be remote (e.g., separate) from infrared lens assembly 14 and visible light lens assembly 16 of thermal imaging camera 10, or display 18 may be in a different spatial arrangement relative to infrared lens assembly 14 and/or visible light lens assembly 16. Therefore, although display 18 is shown behind infrared lens assembly 14 and visible light lens assembly 16 in FIG. 2, other locations for display 18 are possible.

Thermal imaging camera 10 can include a variety of user input media for controlling the operation of the camera and adjusting different settings of the camera. Example control functions may include adjusting the focus of the infrared and/or visible light optics, opening/closing a shutter, capturing an infrared and/or visible light image, or the like. In the example of FIGS. 1 and 2, thermal imaging camera 10 includes a depressible trigger control 20 for capturing an infrared and visible light image, and buttons 28 for controlling other aspects of the operation of the camera. A different number or arrangement of user input media are possible, and it should be appreciated that the disclosure is not limited in this respect. For example, thermal imaging camera 10 may include a touch screen display 18 which receives user input by depressing different portions of the screen.

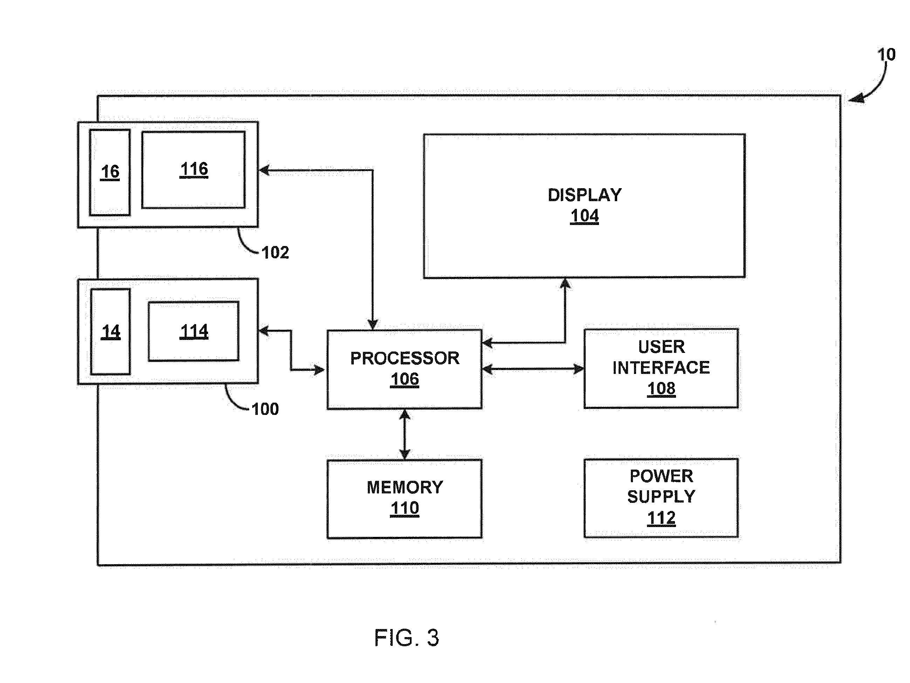

FIG. 3 is a functional block diagram illustrating components of an example of thermal imaging camera 10, which includes an infrared camera module 100, a visible light camera module 102, a display 104, a processor 106, a user interface 108, a memory 110, and a power supply 112. Processor is communicatively coupled to infrared camera module 100, visible light camera module 102, display 104, user interface 108, and memory 110. Power supply 112 delivers operating power to the various components of thermal imaging camera 10 and, in some examples, may include a rechargeable or non-rechargeable battery and a power generation circuit.

Infrared camera module 100 may be configured to receive infrared energy emitted by a target scene and to focus the infrared energy on an infrared sensor for generation of infrared energy data, e.g., that can be displayed in the form of an infrared image on display 104 and/or stored in memory 110. Infrared camera module 100 can include any suitable components for performing the functions attributed to the module herein. In the example of FIG. 3, infrared camera module is illustrated as including infrared lens assembly 14 and infrared sensor 114. As described above with respect to FIGS. 1 and 2, infrared lens assembly 14 includes at least one lens that takes infrared energy emitted by a target scene and focuses the infrared energy on infrared sensor 114. Infrared sensor 114 responds to the focused infrared energy by generating an electrical signal that can be converted and displayed as an infrared image on display 104.

Infrared lens assembly 14 can have a variety of different configurations. In some examples, infrared lens assembly 14 defines a F-number (which may also be referred to as a focal ratio or F-stop) of a specific magnitude. A F-number may be determined by dividing the focal length of a lens (e.g., an outermost lens of infrared lens assembly 14) by a diameter of an entrance to the lens, which may be indicative of the amount of infrared radiation entering the lens. In general, increasing the F-number of infrared lens assembly 14 may increase the depth-of-field, or distance between nearest and farthest objects in a target scene that are in acceptable focus, of the lens assembly. An increased depth of field may help achieve acceptable focus when viewing different objects in a target scene with the infrared optics of thermal imaging camera 10 set at a hyperfocal position. If the F-number of infrared lens assembly 14 is increased too much, however, the spatial resolution (e.g., clarity) may decrease such that a target scene is not in acceptable focus.

Infrared sensor 114 may include one or more focal plane arrays (FPA) that generate electrical signals in response to infrared energy received through infrared lens assembly 14. Each FPA can include a plurality of infrared sensor elements including, e.g., bolometers, photon detectors, or other suitable infrared sensor elements. In operation, each sensor element, which may each be referred to as a sensor pixel, may change an electrical characteristic (e.g., voltage or resistance) in response to absorbing infrared energy received from a target scene. In turn, the change in electrical characteristic can provide an electrical signal that can be received by processor 106 and processed into an infrared image displayed on display 104.

For instance, in examples in which infrared sensor 114 includes a plurality of bolometers, each bolometer may absorb infrared energy focused through infrared lens assembly 14 and increase in temperature in response to the absorbed energy. The electrical resistance of each bolometer may change as the temperature of the bolometer changes. Processor 106 may measure the change in resistance of each bolometer by applying a current (or voltage) to each bolometer and measure the resulting voltage (or current) across the bolometer. Based on these data, processor 106 can determine the amount of infrared energy emitted by different portions of a target scene and control display 104 to display a thermal image of the target scene.

Independent of the specific type of infrared sensor elements included in the FPA of infrared sensor 114, the FPA array can define any suitable size and shape. In some examples, infrared sensor 114 includes a plurality of infrared sensor elements arranged in a grid pattern such as, e.g., an array of sensor elements arranged in vertical columns and horizontal rows. In various examples, infrared sensor 114 may include an array of vertical columns by horizontal rows of, e.g., 16 x 16, 50 x 50, 160 x 120, 120 x 160, or 640 x 480. In other examples, infrared sensor 114 may include a smaller number of vertical columns and horizontal rows (e.g., 1 x 1), a larger number vertical columns and horizontal rows (e.g., 1000 x 1000), or a different ratio of columns to rows.

During operation of thermal imaging camera 10, processor 106 can control infrared camera module 100 to generate infrared image data for creating an infrared image. Processor 106 can generate a "frame" of infrared image data by measuring an electrical signal from each infrared sensor element included in the FPA of infrared sensor 114. The magnitude of the electrical signal (e.g., voltage, current) from each infrared sensor element may correspond to the amount of infrared radiation received by each infrared sensor element, where sensor elements receiving different amounts of infrared radiation exhibit electrical signal with different magnitudes. By generating a frame of infrared image data, processor 106 captures an infrared image of a target scene at a given point in time.

Processor 106 can capture a single infrared image or "snap shot" of a target scene by measuring the electrical signal of each infrared sensor element included in the FPA of infrared sensor 114 a single time. Alternatively, processor 106 can capture a plurality of infrared images of a target scene by repeatedly measuring the electrical signal of each infrared sensor element included in the FPA of infrared sensor 114. In examples in which processor 106 repeatedly measures the electrical signal of each infrared sensor element included in the FPA of infrared sensor 114, processor 106 may generate a dynamic thermal image (e.g., a video representation) of a target scene. For example, processor 106 may measure the electrical signal of each infrared sensor element included in the FPA at a rate sufficient to generate a video representation of thermal image data such as, e.g., 30 Hz or 60 Hz. Processor 106 may perform other operations in capturing an infrared image such as sequentially actuating a shutter (not illustrated) to open and close an aperture of infrared lens assembly 14, or the like.

With each sensor element of infrared sensor 114 functioning as a sensor pixel, processor 106 can generate a two-dimensional image or picture representation of the infrared radiation from a target scene by translating changes in an electrical characteristic (e.g., resistance) of each sensor element into a time-multiplexed electrical signal that can be processed, e.g., for visualization on display 104 and/or storage in memory 110. Processor 106 may perform computations to convert raw infrared image data into scene temperatures including, in some examples, colors corresponding to the scene temperatures.

Processor 106 may control display 104 to display at least a portion of an infrared image of a captured target scene. In some examples, processor 106 controls display 104 so that the electrical response of each sensor element of infrared sensor 114 is associated with a single pixel on display 104. In other examples, processor 106 may increase or decrease the resolution of an infrared image so that there are more or fewer pixels displayed on display 104 than there are sensor elements in infrared sensor 114. Processor 106 may control display 104 to display an entire infrared image (e.g., all portions of a target scene captured by thermal imaging camera 10) or less than an entire infrared image (e.g., a lesser port of the entire target scene captured by thermal imaging camera 10). Processor 106 may perform other image processing functions, as described in greater detail below.

Although not illustrated on FIG. 3, thermal imaging camera 10 may include various signal processing or conditioning circuitry to convert output signals from infrared sensor 114 into a thermal image on display 104. Example circuitry may include a bias generator for measuring a bias voltage across each sensor element of infrared sensor 114, analog-to-digital converters, signal amplifiers, or the like. Independent of the specific circuitry, thermal imaging camera 10 may be configured to manipulate data representative of a target scene so as to provide an output that can be displayed, stored, transmitted, or otherwise utilized by a user.

Thermal imaging camera 10 includes visible light camera module 102. Visible light camera module 102 may be configured to receive visible light energy from a target scene and to focus the visible light energy on a visible light sensor for generation of visible light energy data, e.g., that can be displayed in the form of a visible light image on display 104 and/or stored in memory 110. Visible light camera module 102 can include any suitable components for performing the functions attributed to the module herein. In the example of FIG. 3, visible light camera module 102 is illustrated as including visible light lens assembly 16 and visible light sensor 116. As described above with respect to FIGS. 1 and 2, visible light lens assembly 16 includes at least one lens that takes visible light energy emitted by a target scene and focuses the visible light energy on visible light sensor 116. Visible light sensor 116 responds to the focused energy by generating an electrical signal that can be converted and displayed as a visible light image on display 104.

Visible light sensor 116 may include a plurality of visible light sensor elements such as, e.g., CMOS detectors, CCD detectors, PIN diodes, avalanche photo diodes, or the like. The number of visible light sensor elements may be the same as or different than the number of infrared light sensor elements.

In operation, optical energy received from a target scene may pass through visible light lens assembly 16 and be focused on visible light sensor 116. When the optical energy impinges upon the visible light sensor elements of visible light sensor 116, photons within the photodetectors may be released and converted into a detection current. Processor 106 can process this detection current to form a visible light image of the target scene.

During use of thermal imaging camera 10, processor 106 can control visible light camera module 102 to generate visible light data from a captured target scene for creating a visible light image. The visible light data may include luminosity data indicative of the color(s) associated with different portions of the captured target scene and/or the magnitude of light associated with different portions of the captured target scene. Processor 106 can generate a "frame" of visible light image data by measuring the response of each visible light sensor element of thermal imaging camera 10 a single time. By generating a frame of visible light data, processor 106 captures visible light image of a target scene at a given point in time. Processor 106 may also repeatedly measure the response of each visible light sensor element of thermal imaging camera 10 so as to generate a dynamic thermal image (e.g., a video representation) of a target scene, as described above with respect to infrared camera module 100.

With each sensor element of visible light camera module 102 functioning as a sensor pixel, processor 106 can generate a two-dimensional image or picture representation of the visible light from a target scene by translating an electrical response of each sensor element into a time-multiplexed electrical signal that can be processed, e.g., for visualization on display 104 and/or storage in memory 110.

Processor 106 may control display 104 to display at least a portion of a visible light image of a captured target scene. In some examples, processor 106 controls display 104 so that the electrical response of each sensor element of visible light camera module 102 is associated with a single pixel on display 104. In other examples, processor 106 may increase or decrease the resolution of a visible light image so that there are more or fewer pixels displayed on display 104 than there are sensor elements in visible light camera module 102. Processor 106 may control display 104 to display an entire visible light image (e.g., all portions of a target scene captured by thermal imaging camera 10) or less than an entire visible light image (e.g., a lesser port of the entire target scene captured by thermal imaging camera 10).

As noted above, processor 106 may be configured to determine a distance between thermal imaging camera 10 and an object in a target scene captured by a visible light image and/or infrared image generated by the camera. Processor 106 may determine the distance based on a focus position of the infrared optics associated with the camera. For example, processor 106 may detect a position (e.g., a physical position) of a focus mechanism associated with the infrared optics of the camera (e.g., a focus position associated with the infrared optics) and determine a distance-to-target value associated with the position. Processor 106 may then reference data stored in memory 110 that associates different positions with different distance-to-target values to determine a specific distance between thermal imaging camera 10 and the object in the target scene.

In these and other examples, processor 106 may control display 104 to concurrently display at least a portion of the visible light image captured by thermal imaging camera 10 and at least a portion of the infrared image captured by thermal imaging camera 10. Such a concurrent display may be useful in that an operator may reference the features displayed in the visible light image to help understand the features concurrently displayed in the infrared image, as the operator may more easily recognize and distinguish different real-world features in the visible light image than the infrared image. In various examples, processor 106 may control display 104 to display the visible light image and the infrared image in side-by-side arrangement, in a picture-in-picture arrangement, where one of the images surrounds the other of the images, or any other suitable arrangement where the visible light and the infrared image are concurrently displayed.

For example, processor 106 may control display 104 to display the visible light image and the infrared image in a fused arrangement. In a fused arrangement, the visible light image and the infrared image may be superimposed on top of one another. An operator may interact with user interface 108 to control the transparency or opaqueness of one or both of the images displayed on display 104. For example, the operator may interact with user interface 108 to adjust the infrared image between being completely transparent and completely opaque and also adjust the visible light image between being completely transparent and completely opaque. Such an example fused arrangement, which may be referred to as an alpha-blended arrangement, may allow an operator to adjust display 104 to display an infrared-only image, a visible light-only image, of any overlapping combination of the two images between the extremes of an infrared-only image and a visible light-only image.

Components described as processors within thermal imaging camera 10, including processor 106, may be implemented as one or more processors, such as one or more microprocessors, digital signal processors (DSPs), application specific integrated circuits (ASICs), field programmable gate arrays (FPGAs), programmable logic circuitry, or the like, either alone or in any suitable combination.

In general, memory 110 stores program instructions and related data that, when executed by processor 106, cause thermal imaging camera 10 and processor 106 to perform the functions attributed to them in this disclosure. Memory 110 may include any fixed or removable magnetic, optical, or electrical media, such as RAM, ROM, CD-ROM, hard or floppy magnetic disks, EEPROM, or the like. Memory 110 may also include a removable memory portion that may be used to provide memory updates or increases in memory capacities. A removable memory may also allow image data to be easily transferred to another computing device, or to be removed before thermal imaging camera 10 is used in another application.

An operator may interact with thermal imaging camera 10 via user interface 108, which may include buttons, keys, or another mechanism for receiving input from a user. The operator may receive output from thermal imaging camera 10 via display 104. Display 104 may be configured to display an infrared-image and/or a visible light image in any acceptable palette, or color scheme, and the palette may vary, e.g., in response to user control. In some examples, display 104 is configured to display an infrared image in a monochromatic palette such as grayscale or amber. In other examples, display 104 is configured to display an infrared image in a color palette such as, e.g., ironbow, blue-red, or other high contrast color scheme. Combination of grayscale and color palette displays are also contemplated.

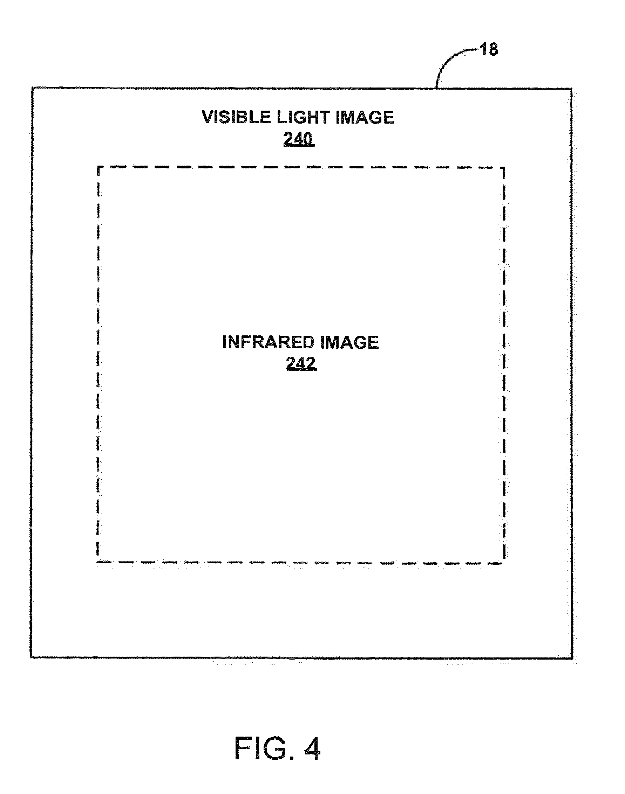

While processor 106 can control display 104 to concurrently display at least a portion of an infrared image and at least a portion of a visible light image in any suitable arrangement, a picture-in-picture arrangement may help an operator to easily focus and/or interpret a thermal image by displaying a corresponding visible image of the same scene in adjacent alignment. FIG. 4 is a conceptual illustration of one example picture-in-picture type display of a visual image 240 and an infrared image 242. In the example of FIG. 4, visual image 240 surrounds infrared image 242, although in other examples infrared image 242 may surround visual image 240, or visual image 240 and infrared image 242 may have different relative sizes or shapes than illustrated and it should be appreciated that the disclosure is not limited in this respect.

During operation of thermal imaging camera 10, processor 106 controls infrared camera module 100 and visible light camera module 102 with the aid of instructions associated with program information that is stored in memory 110 to generate a visible light image and an infrared image of a target scene. Processor 106 further controls display 104 to display the live and captured visible light image, and infrared fused image generated by thermal imaging camera 10. Memory 110 can further store infrared and visible light images along with data regarding the camera settings used to obtain the images.

The program information can further control the operations necessary for retaking the infrared image in the same position as an earlier infrared image. For example, the processor 106 can process the stored images to determine thermal imaging camera's 10 position when the stored image was taken. It can further determine the current position of the thermal imaging camera 10 by analyzing a current live image or a series of live images, compare the first position with the live image position, and direct the user to reposition the thermal imaging camera 10 toward the first position. In some embodiments, the processor can further automatically set the camera to the original settings and/or direct the user to apply the original settings. Finally, when the processor 106 determines that the position of the thermal imaging camera 10 is sufficiently close to the first position, it can direct the thermal imaging camera 10 to automatically take an infrared and/or visible light image or can direct the user to take an infrared and/or visible light image.

In some embodiments, the program information which is used by the processor 106 for retaking an infrared image or fused infrared and visible light image in the same position at a later time can include program information for feature extraction, feature description, and camera localization. Program information for feature extraction finds points in an first visible light image that are likely to be easily distinguished in other images in the same area. Examples of known algorithms that may be used in a feature extraction program in embodiments of the invention include CenSurE (Center surround Extremas), FAST, FAST-ER, SIFT (Scale Invariant Feature Transform), SURF (Speeded Up Robust Features), MSER (Maximally Stable Extremal Regions), algebraic models, and the Harris Corner Detector, for example. Program information for feature description takes the points found in the feature extraction process and gives them a description that is likely to be similar across all images of that same point. Examples of known algorithms that may be used in a feature descriptor program in embodiments of the invention include DAISY, CHoG (Compressed Histograms of Gradients), SIFT, SURF, MU-SURF, Global Context Descriptors, and FFT/DCT Based Descriptor, for example. Camera localization or pose estimation program information uses a set of features recognized across multiple images to determine the current camera location in comparison to a desired camera location. Examples of known algorithms that may be used in a camera localization or pose estimation program in embodiments of the invention include Viewfinder Alignment, 5-Point Algorithm, Interval Analysis, Plane Rectification, SLAM (Simultaneous Localization and Mapping) and Fundamental Matrix Matching.

In some embodiments, the program information which is used by the processor 106 for retaking an infrared image or fused infrared and visible light image includes algorithms which perform a three-dimensional reconstruction of the scene. In such embodiments, the user takes two visible light images of the first scene, with a wide baseline. For example, one image approximates the desired viewpoint, and another image that may be rotated approximately 20 degrees relative to the first image. The program information then can complete a three-dimensional structure using these two images. Computational rephotography algorithms which can be used are known and include the algorithm of Stewerius et al. to compute relative pose using SIFT correspondences between the two images and sampling loop such as RANSAC or something similar. The program can then detect correspondences, which are points which are identical in each view, which it may display for the user to confirm. These correspondences can then be used by the programming information to create a three-dimensional reconstruction of the scene. This three-dimensional reconstruction can then be used by the programming information to compare a current (or later obtained) image to an first image to determine what repositioning is necessary.

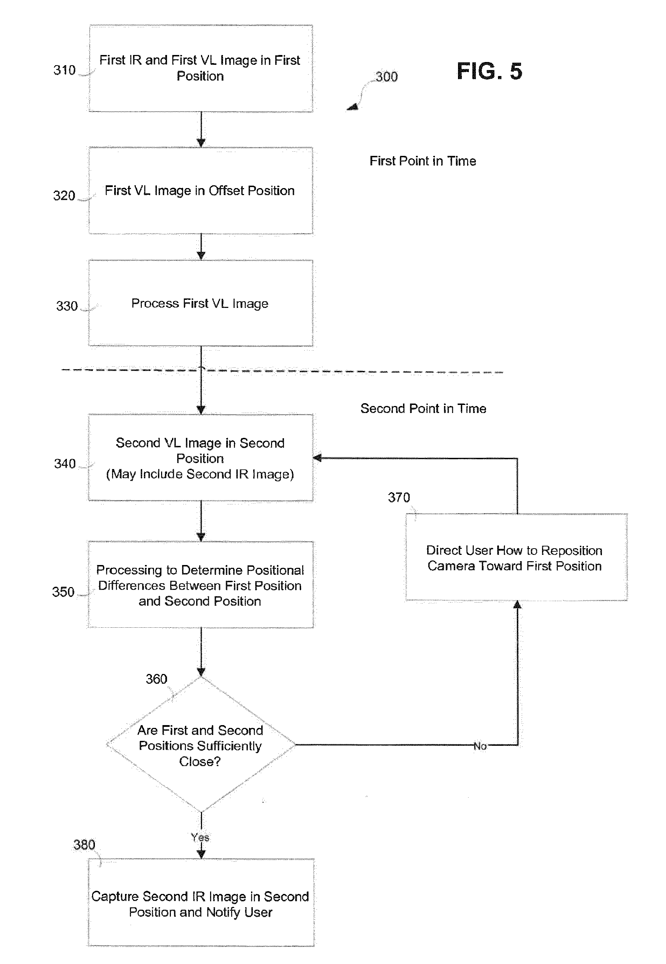

FIG. 5 presents a flow chart of a method 300 for retaking an infrared image according to some embodiments of the invention. In step 310, a first infrared image and a first visible light image are taken in a first position at a first point in time. These first images may be stored in the memory 110 of the thermal energy camera 10 for retrieval at a later, second point in time for use by the same thermal energy camera 10. Alternatively, the stored first images may be transferred to a second thermal energy camera 10 for use at a second point in time. That is, the first images need not be taken by the same thermal energy camera that takes the second image. The user is instructed via the display or other user interface to capture the first visible light image from a different vantage point. In step 320, the thermal image camera 10 captures the first visible light image from a vantage point slightly offset (e.g., 20 degrees offset) from the first position. Typically, the first infrared image and the first visible light image are captures of a single frame. The display may be displaying a live image during this process 300. The first position approximates the desired viewpoint and is captured both as a visible light image and an infrared image. In the offset position, at least another first visible light image is captured. In step 330, computational rephotography algorithms are then employed in the processor, in certain embodiments, to create the three-dimensional reconstruction of the scene using at least both first visible light images. Also in step 330, in certain embodiments, computational rephotography algorithms are also employed in the processor to analyze the first visible light images and extract features that are likely to be easily distinguished from other parts of the scene. These computerized rephotography algorithms may be performed at the first point in time or at some point in time afterwards. In addition, these computer rephotography algorithms may be performed in the camera 10 by the processor 106. However, in certain embodiments, these computer rephotography algorithms are performed by a separate computer (e.g., a personal computer, cloud computing, etc.). In such embodiments, the first visible light images would be transferred to the separate computer for computerized rephotography processing.

At a second point in time, some time after the first point in time, a second visible light image is captured in a second position at step 340. The second image may be a capture frame or a series of captured frames of the live image. The second position may be selected by the user as an approximation of the first position, based upon a visual analysis of the first visible light and/or first infrared image. For instance, the camera display may display to the user at least the first visible light image taken from the desired viewpoint, and, the camera, via the display, may instruct the user to try and rephotograph the first image based on the user's visual approximation between the first image and the current live image, which may be displayed simultaneously on the display with the first image (e.g., side-by-side, overlapping, picture-in-picture, blended, etc.). In certain embodiments, the camera may also capture a second infrared image from the second position simultaneously with the capture of the second visible light image.

In step 350, the processor 106 of the thermal imaging camera then processes the first visible light image and the second visible light image using program information as described herein (e.g., computerized rephotography algorithms) to determine the positional differences between the first position and the second position.

At step 360, the processor 106 determines whether the first position and the second position are the same, or are sufficiently close. If the positions are the same or sufficiently the same, a second infrared image may be captured at the second position at step 380. As noted above, the processor 106 may automatically capture the second infrared image if the first and second positions are sufficiently close, or the processor may signal the user (e.g., visually via the display or other indicator, audibly, or vibrationally) to manually capture the second infrared image by, for instance, depressing trigger 20. Alternatively, if a second infrared image was captured already in step 340 (i.e., concurrently with the capture of the second visible light image), the processor can then designate that such second infrared image is a good rephotograph of the first infrared image. Whether or not the second IR image is captured in step 380 or step 340, the user is notified in step 380 (e.g., visually via the display or other indicator, audibly, or vibrationally) that the second IR image is a good rephotograph of the first IR image or that the rephotography process is complete.

If, in step 360, the processor determines that the first position and the second position are not sufficiently the same, the processor will, in step 370, signal the user to move the camera toward the first position, such as by sending information to the display 18 that directs the user to reposition the thermal imaging camera 10. The process then repeats with another second visible light image in another second position at step 340, image processing at step 350 and comparison at step 360 until the first position and the second position are the same or sufficiently the same. The process of capturing visible light images, processing the images, and directing the user to reposition can occur continuously using frames of live images such that the user is directed in real time to reposition the thermal imaging camera until the thermal imaging camera is at or is sufficiently close to the first position to retake the thermal image of the object or scene.

The determination of whether a camera position is sufficiently close to the position at which an first image was taken can be made using the programming information. For example, a particular amount of tolerance for variation from the first position may be preset into the thermal imaging camera 10. Furthermore, in some embodiments, when an image is captured at a position that is sufficiently close (within the allowed tolerance), the programming information may translate (recenter) the captured image to align more exactly with the first image. This shift may occur automatically or at the direction of the user.

By having first and second infrared images, taken at different points in time but from generally the same position, a comparison may be made to determine how the infrared images have changed. In this way, the first infrared image or fused infrared and visible light image may be compared to the second infrared image or fused infrared and visible light image, so that changes in the infrared aspect of the image, representing changes in heat patterns, may be more easily identified. The comparison may be made from a side-by-side manual comparison. The images could also be superimposed to more easily identify thermal shifts. Or, the processor 106 or other non-camera software could be employed to perform a thermal analysis of the two infrared images to identify thermal differences. A thermal shift may indicate a potential malfunction that can be remedied before it becomes a larger problem.

Example thermal image cameras and related techniques have been described. The techniques described in this disclosure may also be embodied or encoded in a computer-readable medium, such as a non-transitory computer-readable storage medium containing instructions. Instructions embedded or encoded in a computer-readable storage medium may cause a programmable processor, or other processor, to perform the method, e.g., when the instructions are executed. Computer readable storage media may include random access memory (RAM), read only memory (ROM), a hard disk, optical media, or other computer readable media.

Various examples have been described. These and other examples are within the scope of the following claims.

## Claims

1. A portable, hand-held thermal imaging camera comprising:
an infrared (IR) lens assembly having an associated IR sensor for detecting thermal images of a target scene;
a visible light (VL) lens assembly having an associated VL sensor for detecting VL images of the target scene;
a display adapted to display at least a portion of the VL image or at least a portion of the IR image;
a memory adapted for storing a first VL image of a target scene captured concurrently with a first IR image of the target scene at a first position, the memory adapted for storing a second VL image of the target scene and a second IR image; and
a processor programmed with instructions to capture the first VL image concurrent with the capture of the first IR image at the first position and at a first point in time, the processor programmed with instructions to capture the second VL image at a second position and at a second point in time, the second point in time being after the first point in time,
the processor programmed with instructions to compare the first VL image to the second VL image and, based on the comparison, to determine the camera motion needed to move the camera toward the first position,
the processor programmed with instructions to signal the user with instructions how to reposition the camera toward the first position, the processor programmed with instructions to capture the second IR image when the camera is repositioned approximately in the first position.

2. The camera of claim 1, wherein, as the second VL image is being captured, the processor continues to signal the user with instructions how to reposition the camera toward the first position until the camera is repositioned approximately to the first position.

3. The camera of claim 1 or claim 2, wherein, when the processor detects that the camera is in approximately the first position, the processor provides a signal the user to capture the second IR image of the object or automatically captures the second IR image of the object.

4. The camera of any one of the preceding claims, wherein the processor captures the second IR image concurrently with second VL image.

5. The camera of any one of the preceding claims, wherein the processor automatically shifts the second IR image of the object to align with the first IR image of the object.

6. The camera of any one of the preceding claims, wherein the processor captures the second IR image before analyzing whether the camera is repositioned approximately in the first position.

7. The camera of any one of the preceding claims, wherein the memory is further adapted for storing a set of camera settings under which the first IR image was taken, and
wherein the processor is preferably adapted to automatically apply one or more of the camera settings to the camera before capturing the second VL image.

8. The camera of any one of the preceding claims, wherein the processor signals the user with visual instructions on how to reposition the camera toward the first position by one or more visual indicators on the display,
the one or more visual indicators preferably including a symbol indicating a direction of translation for repositioning the camera toward the first position.

9. The camera of any one of the preceding claims, wherein the processor is programmed with instructions using computerized rephotography algorithms on the first VL image and the second VL image to rephotograph the first IR image.

10. A method of retaking an infrared (IR) image of a scene comprising:
selecting a first visible light (VL) image of the scene, wherein the first VL image was captured simultaneously with a first IR image of the scene by a first thermal imaging camera in a first position at a first point in time;
obtaining a live VL image of the scene at a second point in time using a second thermal imaging camera;
comparing the first VL image to the live VL image and, based on the comparison, determining the camera motion needed to move the second thermal imaging camera toward the first position;
receiving instructions from the second thermal imaging camera indicating how to reposition the second thermal imaging camera toward the first position; and
capturing a second IR image when the second thermal imaging camera is repositioned to approximately in the first position,
wherein the first and second thermal imaging cameras may be the same camera or may be different cameras.

11. The method of claim 10, wherein the live VL image is a continuous stream of live VL images of the scene.

12. The method of claim 10 or claim 11, wherein the instructions received are continuously updated as the second thermal imaging camera is repositioned.

13. The method of any one of claims 10 to 12, further comprising receiving an indication from the second thermal imaging camera to take the capture the second IR image when the second thermal imaging camera is approximately in the first position.

14. The method of any one of claims 10 to 13, wherein receiving an indication from the second thermal imaging camera of how to reposition the second thermal imaging camera toward the first position comprises seeing a visual indication on a display of the second thermal imaging camera.

15. The method of any one of claims 10 to 14, wherein the second IR image is captured concurrently with live VL image.
